# EUROPÄISCHE PATENTSCHRIFT

(11) **EP 2 507 088 B1**
(45) Veröffentlichungstag und Bekanntmachung des Hinweises auf die Patenterteilung: **25.02.2015**
(21) Anmeldenummer: 10792823.6
(22) Anmeldetag: 02.12.2010
(51) Int. Cl.: B60L 3/00, H02H 6/00, B60L 3/04

(54) **EXTERNER HAUPTSCHALTER FÜR EIN HYBRID- ODER ELEKTROFAHRZEUG**
EXTERNAL MAIN SWITCH FOR A HYBRID OR ELECTRIC VEHICLE
COMMUTATEUR PRINCIPAL EXTERNE POUR UN VÉHICULE HYBRIDE OU ÉLECTRIQUE

(30) Priorität: 04.12.2009 DE 102009057007
(43) Veröffentlichungstag der Anmeldung: 10.10.2012
(73) Patentinhaber: Audi AG, 85045 Ingolstadt (DE)
(72) Erfinder: MEURLE, Jürgen, 85055 Ingolstadt (DE)
(74) Vertreter: Herbst, Matthias Heinz
(86) Internationale Anmeldenummer: PCT/EP2010/007320
(87) Internationale Veröffentlichungsnummer: WO 2011/066968

(56) Entgegenhaltungen:
- KR-A- 20030 024 124
- Rachel Gordon: "Vandals halt some hybrid buses in Hunters Point", , 7. März 2008 (2008-03-07), XP002634659, Gefunden im Internet: URL:http://www.sfgate.com/cgi-bin/article. cgi?f=/c/a/2008/03/07/BAOKVF1E8.DTL&type=p rintable [gefunden am 2011-04-29]

## Beschreibung

Die Erfindung betrifft ein Fahrzeug, insbesondere ein Hybrid- und/oder Elektrofahrzeug, mit einem von außerhalb des Fahrzeugs bedienbaren Hauptschalter für eine Spannungsversorgung.

Aktuell kann bei Elektrofahrzeugen oder Hybridfahrzeugen eine Unterbrechung der Stromversorgung nur über mechanische Entkoppelung direkt an der Batterieklemme erfolgen.

Wenn ein Fahrzeug verunfallt, können sich Kontaktstellen lösen und die Bordspannung kann auf die Karosserie übertragen werden. Dies ergibt die Gefahr eines Stromschlags für die Rettungskräfte.

Aus dem am 14.08.2009 im Internet abrufbaren Dokument http://boingboing.net2008/03/11/teen-pranksters-swit.html ist die Überlegung bekannt, ein Fahrzeug mit einem von außerhalb des Fahrzeugs bedienbaren Hauptschalter für eine Spannungsversorgung zu versehen.

DE 100 50 379 A1 beschreibt eine Steuervorrichtung eines Hybridfahrzeugs, welche in der Lage ist, den Überentladungszustand der Batterie zu erfassen und die Lade- und Entladeraten der Batterie zum Schutze dieser zu steuern. Die Steuervorrichtung des Hybridfahrzeugs umfasst eine Maschine, welche Antriebskraft an das Fahrzeug ausgibt, einen Motor, welcher direkt mit der Maschine verbunden ist und welcher die Ausgabe bzw. Leistung der Maschine unterstützt, eine Batterie, welche dem Motor elektrische Leistung zuführt und welche durch elektrische Energie geladen wird, die durch Aktivieren des Motors als Generator erzeugt wird, wenn die unterstützende Antriebskraft nicht notwendig ist, einer elektrischen Last, deren elektrische Energie von durch den Motor erzeugter elektrischer Leistung und der Batterie geliefert wird sowie eine Batterie-Schutzvorrichtung, welche die Drehzahl der Maschine erhöht, wenn die Überentladung der Batterie erfasst wird, und welche eine Zufuhr elektrischer Leistung an die elektrische Last stoppt, wenn die Überentladung weiter voranschreitet.

DE 39 28 580 A1 offenbart eine Klappdeckel-Verriegelungsvorrichtung mit einem an einer Karosserie schwenkbar gelagerten, eine Öffnung in der Karosserie abdeckenden Klappdeckel, der mit einem Sperrhaken versehen ist.

DE 694 21 968 T2 beschreibt eine Antriebsanordnung für ein elektrisches Fahrzeug mit einem Hauptschalter zum Verbinden und Trennen einer Fahrzeugbatterie.

WO 2009/001086 A2 zeigt ein Steuerungssystem für ein Batteriebetriebenes Fahrzeug.

WO 2007/080305 A1 offenbart ein Fahrzeug mit einem über eine Fernbedienung bedienbaren Hauptschalter für eine Spannungsversorgung.

Rachel Gordon: "Vandals halt some hybrid buses in Hunters Point", 7. März 2008 (2008-03-07), XP002634659, gefunden im Internet am 29. April 2009: URL:http://www.sfgate.com/cgibin/article.cgi?f=/c/a/2008/03/07/BAOKVF1E8.DTL&type=printable beschreibt das Abschalten der Energieversorgung eines Busses mit einem Schalter. Es wird vorgeschlagen, an Energiekästen Schlösser zu installieren.

KR 2003 0024124 A beschreibt einen Mechanismus, der ein Öffnen einer Tür auch bei defektem Türöffnungsmechanismus ermöglicht.

Die DE 103 47 350 A1 beschreibt eine Notausstiegsvorrichtung für ein Kraftfahrzeug, bei der ein Crashsensor eine unmittelbar bevorstehende Kollision mit einem Hindernis detektiert, ein Aktivierungssignal generiert und eine Notausstiegsteuereinrichtung daraufhin eine Hecktür öffnet.

Aus der US 5 757 150 A ist ein elektrisches System für ein Elektrofahrzeug bekannt, das im Fall einer Kollision des Fahrzeugs die Spannungsversorgung mittels Schaltern unterbricht.

Die DE 10 2005 039 030 A1 beschreibt eine Sicherheitseinrichtung für ein Fahrzeug mit einem manuell bedienbaren Sicherheitsschaltelement, mit welchem nach einem Unfall ein Insasse des Fahrzeugs eine Sicherheitsmaßnahme aktivieren kann um sicher in dem Fahrzeug verharren zu können oder um das Verlassen des Fahrzeugs zu erleichtern.

Davon ausgehend liegt der Erfindung die Aufgabe zugrunde, die Sicherheit beim Umgang mit Fahrzeugen weiter zu erhöhen.

Diese Aufgabe wird durch die in den unabhängigen Ansprüchen angegebenen Erfindungen gelöst. Vorteilhafte Ausgestaltungen ergeben sich aus den abhängigen Ansprüchen.

Demnach weist ein Hybrid- und/oder Elektrofahrzeug einen von außerhalb des Fahrzeugs bedienbaren Hauptschalter für eine Spannungsversorgung, die eine Spannungsversorgung eines Traktionsmotors des Fahrzeugs ist, und eine Sicherung auf, die den Hauptschalter gegen unautorisierte Bedienung sichert.

Darüber hinaus weist das Fahrzeug eine Sicherungsfreischaltung auf, die die Sicherung frei- und/oder ausschaltet und damit eine Bedienung des Hauptschalters autorisiert, wenn ein Unfall, eine Systemstörung und/oder ein Servicefall erkannt wird. Die Sicherung weist eine Klappe auf, die durch die Sicherungsfreischaltung entriegelt wird.

Die Klappe ist an der Karosserie angeordnet, wobei der Hauptschalter unter der Klappe angeordnet ist.

Die Klappe kann beispielsweise spiegelbildlich zum Tankdeckel am Fahrzeug angeordnet sein.

Zu einer weiteren Erhöhung der Sicherheit ist die Klappe vorzugsweise aus nichtleitendem Material ausgeführt.

Darüber hinaus oder alternativ lässt sich die Sicherheit erhöhen, wenn der Hauptschalter in einem elektrostatisch abgeschirmten Bereich angeordnet ist.

Die Sicherungsfreischaltung kann die Klappe nicht nur entriegeln, sondern durch eine Federspannung auch öffnen, wodurch der Hauptschalter direkt zugänglich wird.

Die Spannungsversorgung ist insbesondere eine Spannungsversorgung, die von einer Hochvoltbatterie bereitgestellt wird.

Bei dem erfindungsgemäßen Verfahren zum Betrieb eines Hybrid- und/oder Elektrofahrzeugs wird ein von außerhalb des Fahrzeugs bedienbarer Hauptschalter für eine Spannungsversorgung eines Traktionsmotors des Fahrzeugs durch eine Sicherung gegen unautorisierte Bedienung gesichert. Die Sicherung wird durch eine Sicherungsfreischaltung, die das Fahrzeug aufweist, frei geschaltet und damit eine Bedienung des Hauptschalters autorisiert, wenn ein Unfall, eine Systemstörung und/oder ein Servicefall erkannt wird. Dabei weist die Sicherung eine Klappe auf, die durch die Sicherungsfreischaltung entriegelt wird.

Weitere vorteilhafte Ausgestaltungen ergeben sich aus der Beschreibung eines Ausführungsbeispiels.

Dabei liegt ein Hauptschalter analog dem Tankdeckel unter einer verriegelten Verschlusskappe, die im Notfall oder Unfall entriegelt wird, mechanisch aufschwenkt (z.B. über Federvorspannung) und damit den Zugang zum Hauptschalter ermöglicht.

Die Unterbringung findet in einem elektrostatisch abgeschirmten Bereich (Anbindung an Karosserie durch Nichtleitermaterialien) statt, wobei der Deckel ebenso aus Kunststoff ist.

Der Hauptschalter ist in lokaler Nähe zum Batteriepackage im Bereich vor der Hinterachse unterzubringen. Die Unterbringung erfolgt z.B. unter einem Klappdeckel, einseitig scharniert unter Federspannung, dem Scharnier gegenüber mit einem Stift und bündig in der Karosserieaußenhaut gehalten.

Durch die Erfindung ist das Fahrzeug von außen ohne Kontakt mit der Fahrzeugoberfläche von der Stromversorgung abzukoppeln.

Eine Bergung des Fahrzeuges, wie auch eine Bergung von Insassen kann im Anschluss gefahrlos erfolgen.

## Patentansprüche

1. Hybrid- und/oder Elektrofahrzeug mit einem von außerhalb des Fahrzeugs bedienbaren Hauptschalter für eine Spannungsversorgung, die eine Spannungsversorgung eines Traktionsmotors des Fahrzeugs ist, und mit einer Sicherung, die den Hauptschalter gegen unautorisierte Bedienung sichert, **dadurch gekennzeichnet, dass** das Fahrzeug eine Sicherungsfreischaltung aufweist, die die Sicherung frei schaltet und damit eine Bedienung des Hauptschalters autorisiert, wenn ein Unfall, eine Systemstörung und/oder ein Servicefall erkannt wird, wobei die Sicherung eine Klappe aufweist und wobei die Sicherungsfreischaltung die Klappe entriegelt.

2. Fahrzeug nach Anspruch 1, **dadurch gekennzeichnet, dass** die Klappe an der Karosserie angeordnet ist, wobei der Hauptschalter unter der Klappe angeordnet ist.

3. Fahrzeug nach Anspruch 2, **dadurch gekennzeichnet, dass** die Klappe spiegelbildlich zum Tankdeckel am Fahrzeug angeordnet ist.

4. Fahrzeug nach einem der vorhergehenden Ansprüche, **dadurch gekennzeichnet, dass** die Klappe mit nichtleitendem Material ausgeführt ist.

5. Fahrzeug nach einem der vorhergehenden Ansprüche, **dadurch gekennzeichnet, dass** der Hauptschalter in einem elektrostatisch abgeschirmten Bereich angeordnet ist.

6. Fahrzeug nach einem der vorhergehenden Ansprüche, **dadurch gekennzeichnet, dass** die Sicherungsfreischaltung die Klappe öffnet.

7. Fahrzeug nach einem der vorhergehenden Ansprüche, **dadurch gekennzeichnet, dass** die Spannungsversorgung eine Spannungsversorgung ist, die von einer Hochvoltbatterie bereitgestellt wird.

8. Verfahren zum Betrieb eines Hybrid- und/oder Elektrofahrzeugs, bei dem ein von außerhalb des Fahrzeugs bedienbarer Hauptschalter für eine Spannungsversorgung eines Traktionsmotors des Fahrzeugs durch eine Sicherung gegen unautorisierte Bedienung gesichert wird, **dadurch gekennzeichnet, dass** die Sicherung durch eine Sicherungsfreischaltung, die das Fahrzeug aufweist, frei geschaltet und damit eine Bedienung des Hauptschalters autorisiert wird, wenn ein Unfall, eine Systemstörung und/oder ein Servicefall erkannt wird, wobei die Sicherung eine Klappe aufweist und wobei die Sicherungsfreischaltung die Klappe entriegelt.

## Claims

1. Hybrid and/or electric vehicle comprising a main switch operable from outside the vehicle for a voltage supply of a traction motor of the vehicle, and comprising a safeguard for safeguarding the main switch from unauthorised operation, **characterised in that** the vehicle comprises a safeguard release which releases the safeguard and thus authorises an operation of the main switch when an accident, a system malfunction and/or a requirement for service is detected, the safeguard comprising a flap and the safeguard release unlocking the flap.

2. Vehicle according to claim 1, **characterised in that** the flap is arranged on the body, the main switch being arranged underneath the flap.

3. Vehicle according to claim 2, **characterised in that** the flap is arranged on the vehicle as a mirror image relative to the tank cap.

4. Vehicle according to any of the preceding claims, **characterised in that** the flap is made of a non-conducting material.

5. Vehicle according to any of the preceding claims, **characterised in that** the main switch is arranged in an electrostatically shielded region.

6. Vehicle according to any of the preceding claims, **characterised in that** the safeguard release opens the flap.

7. Vehicle according to any of the preceding claims, **characterised in that** the voltage supply is a voltage supply provided by a high-voltage battery.

8. Method for operating a hybrid and/or electric vehicle, in which a main switch operable from outside the vehicle for a voltage supply of a traction motor of the vehicle is safeguarded from unauthorised operation by a safeguard, **characterised in that** a safeguard release which the vehicle comprises releases the safeguard and thus authorises an operation of the main switch when an accident, a system malfunction and/or a requirement for service is detected, the safeguard comprising a flap and the safeguard release unlocking the flap.

## Revendications

1. Véhicule hybride et/ou électrique comprenant un commutateur principal actionnable de l'extérieur du véhicule pour une alimentation en tension, qui est une alimentation en tension d'un moteur de traction du véhicule, et un dispositif de sécurité qui protège le commutateur principal contre un fonctionnement non autorisé, **caractérisé en ce que** le véhicule présente un dispositif de déconnexion du dispositif de sécurité qui déconnecte le dispositif de sécurité et autorise en conséquence un fonctionnement du commutateur principal lorsqu'il y a un accident, une défaillance du système et/ou un cas d'entretien qui est ou sont identifiés, dans lequel le dispositif de sécurité présente un volet et dans lequel le dispositif de déconnexion du dispositif de sécurité déverrouille le volet.

2. Véhicule selon la revendication 1, **caractérisé en ce que** le volet est monté sur la carrosserie, le commutateur principal étant situé en dessous du volet.

3. Véhicule selon la revendication 2, **caractérisé en ce que** le volet est monté de manière symétrique par rapport au couvercle de réservoir sur le véhicule.

4. Véhicule selon l'une quelconque des revendications précédentes, **caractérisé en ce que** le volet est constitué d'un matériau non conducteur.

5. Véhicule selon l'une quelconque des revendications précédentes, caractérisé eh ce que le commutateur principal est monté dans une zone protégée de l'électricité statique.

6. Véhicule selon l'une quelconque des revendications précédentes, **caractérisé en ce que** le dispositif de déconnexion du dispositif de sécurité ouvre le volet.

7. Véhicule selon l'une quelconque des revendications précédentes, **caractérisé en ce que** l'alimentation en tension est une alimentation en tension qui est fournie par une batterie haute tension.

8. Procédé de commande d'un véhicule hybride et/ou électrique, dans lequel un commutateur principal actionnable de l'extérieur du véhicule pour une alimentation en tension d'un moteur électrique est protégé par un dispositif de sécurité à l'encontre de tout fonctionnement non autorisé, **caractérisé en ce que** le dispositif de sécurité est déconnecté par un dispositif de déconnexion du dispositif de sécurité que présente le véhicule et, par suite, un actionnement du commutateur principal est autorisé lorsqu'un accident, une défaillance du système et/ou un cas d'entretien est ou sont identifiés, dans lequel le dispositif de sécurité présente un volet et dans lequel le dispositif de déconnexion du dispositif de sécurité déverrouille le volet.
